# EUROPEAN PATENT APPLICATION

(11) **EP 4 246 349 A1**
(43) Date of publication of application: **20.09.2023**
(21) Application number: 23162732.4
(22) Date of filing: 17.03.2023
(51) Int. Cl.: G06F 21/55, H04L 9/40, G06F 16/2457, G06Q 50/26

(54) **SYSTEM AND METHOD FOR PREDICTING SIGNIFICANT FILES FROM WITHIN A DATASET OF INTEREST**

(30) Priority: 18.03.2022 US 202263321282 P
(71) Applicant: Magnetic Forensics Inc., Waterloo, ON N2K 0A8 (CA)
(72) Inventor: MELTON, Tarah, Waterloo, N2K OA8 (CA); WILLIAMSON, Mike, Waterloo, N2K 0A8 (CA); SALIBA, Jad John, Waterloo N2K 0A8, N2K 0A8 (CA); AMICK, Harold C., Ontario, N2K 0A8 (CA); MOODY, Matthew, Waterloo, N2K 0A8 (CA)
(74) Representative: Humphrey-Evans, Edward John

(57) **Abstract**

Systems and methods for predicting significant files for a digital forensic investigation are provided. A method of predicting files of interest during a digital forensic investigation of a target dataset stored on a target device includes tagging a plurality of significant files from a plurality of previous investigations to create at least one set of predictive criteria, storing the at least one set of predictive criteria in a memory of the investigator device, using a first set of predictive criteria to generate a first executable recommendation engine model, storing the recommendation engine model in the memory of an investigator device, automatically scanning the target dataset by a recommendation engine using the first recommendation engine model, and providing an output of any files of interest.

## Description

### Technical Field

The embodiments disclosed herein relate generally to digital forensics, and, in particular to systems and methods for parsing important files and data of interest from large forensic datasets.

### Introduction

In digital forensics there is often a need to quickly identify files and/or data from electronic storage media of a device of interest which are significant to an investigation in order to move the investigation along in a timely manner while also following all legal protocols. However, the device of interest may include a dataset, such as an entire hard drive, so large as to prohibit efficient searching through all possible files of interest. Currently, searching methods include an investigator using their knowledge of where and how important files/data may be stored and searching "manually" through the device. In general, these methods are tedious and may result in missed data as it is nearly impossible for an investigator to effectively search all data, but they become especially detrimental in forensic investigations which are time sensitive. This is particularly true in cases concerning a missing person or an imminent threat to public safety. Using an automatic artificial intelligence method such as machine learning to perform an investigation can require a significant amount of data for training, which may not be available. Further, risks of the resulting model searching beyond the scope of what is legally allowed may be too great.

Accordingly, there is a need for systems and methods which allow for quick automatic predictions of those files and data which are most valuable to the digital forensic investigation.

### Summary

A method of predicting files of interest during a digital forensic investigation of a target dataset stored on a target device may include tagging a plurality of significant files from a plurality of previous investigations to create at least one set of predictive criteria, storing the at least one set of predictive criteria in a memory of the investigator device, using a first set of predictive criteria to generate a first executable recommendation engine model, storing the first recommendation engine model in the memory of an investigator device, automatically scanning the target dataset by a recommendation engine using the first recommendation engine model, and providing an output of any files of interest.

Automatically scanning the target dataset may further include choosing the first recommendation engine model based on a case type of the investigation.

The first recommendation engine model may include a hierarchy of file types of interest.

The at least one file of interest may be ranked according to the hierarchy.

Tagging the plurality of significant files may include manually tagging the plurality of significant files by a user of the investigator device.

The method may further comprise adjusting the first set of predictive criteria to an adjusted set of predictive criteria to alter the first recommendation engine model during the digital forensic investigation.

The method may further include adjusting the first set of predictive criteria to alter the first recommendation engine model based on the output of the digital forensic investigation for use in future digital forensic investigations.

The recommendation engine model further may include at least one filter wherein providing an output of any files of interest includes applying the at least one filter to the files of interest.

The method may further include using a first set of predictive criteria to generate at least a second executable recommendation engine model, storing the at least a second recommendation engine model in the memory of the investigator device; and automatically scanning the target dataset by the recommendation engine using the second recommendation model.

The method may further include using a second set of predictive criteria to generate at least a second executable recommendation engine model, storing the at least a second recommendation engine model in the memory of the investigator device, and automatically scanning the target dataset by the recommendation engine using the second recommendation engine model.

A system for predicting files of interest from a target dataset of a target device may include a target device including a first memory storing a target dataset, and an investigator device including a processor communicatively coupled to a second memory, the investigator device configured to: generate at least one set of predictive criteria from tagged significant files of previous investigations, store the at least one set of predictive criteria in the second memory, create a first recommendation engine model from a first set of predictive criteria of the at least one set of predictive criteria, store the first recommendation engine model in the second memory, scan the target dataset by a recommendation engine using the first recommendation engine model, and provide an output of any files of interest.

The investigator device may be further configured to generate a plurality of sets of predictive criteria for a respective plurality of case types and to create a plurality of recommendation engine models for each of the plurality of sets of predictive criteria respectively.

The output may be a list of files of interest.

The output may be a report.

The at least one set of predictive criteria may include a hierarchy of file types of interest.

The output of files of interest may be ranked according to the hierarchy.

The processor may be further configured to adjust the first set of predictive criteria during an investigation to alter the output.

The processor may be further configured to adjust the first set of predictive criteria to alter the first recommendation engine model for use in future digital forensic investigations based on the output.

The first recommendation engine model may include at least one filter.

The processor may be further configured to create at least a second recommendation engine model from the first set of predictive criteria, store the at least a second recommendation engine model in the second memory, and scan the target dataset by the recommendation engine using the second recommendation engine model.

The processor may be further configured to create at least a second recommendation engine model from a second set of predictive criteria of the at least one set of predictive criteria, store the at least a second recommendation engine model in the second memory, and scan the target dataset by the recommendation engine using the second recommendation engine model.

The systems, methods, and devices as generally and specifically described herein.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a schematic diagram of an overview of a system for predicting files of interest in a forensic dataset including an investigator device and a target device, according to an embodiment.
Figure 2 is a block diagram of a computing device of Figure 1, according to an embodiment.
Figure 3 is a block diagram of an investigator device for predicting files of interest to a digital forensic investigation from within a forensic dataset, according to an embodiment.
Figure 4 is a flow diagram of a general method of predicting files of interest in a digital forensic investigation from within a forensic dataset, according to an embodiment.
Figure 5 is a flow diagram of a method of predicting files of interest for a digital forensic investigation from within a forensic dataset, according to an embodiment.
Figure 6 is a flow diagram of a method of predicting files of interest for a digital forensic investigation from within a forensic dataset, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or objectoriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods, and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

Herein, systems and methods for creating and using a recommendation engine model during a digital forensic investigation in order to provide a quick and automatic prediction of files of interest to the investigation from a forensic dataset are provided. In digital forensic investigations, time is often of the essence, for example, to obtain a warrant or a broader warrant, to ensure the safety of vulnerable individuals, or to provide enough evidence to make an arrest.

As an example, Child Exploitation investigators need the fastest tools in their arsenal to be able to locate illegal material and get to the evidence as quickly as possible. Computer systems capable of fast triaging of forensically relevant data can help the forensic investigator determine which devices to seize for a forensic examination. This can be important in cases such as executing a search warrant at a suspect's home or determining if a paroled offender has breached their release conditions.

Quickly finding even just a few files of interest within a target dataset of a target device of a person of interest or other party ("subject") may be enough to have a significant impact. Beneficially, it is often the same types of files (or data) which are searched for and found to be useful in an investigation. Therefore, at least part of the process of a digital forensic investigation may be automated by creating a model to search for those files of interest. The present systems and methods allow an investigator to configure recommendation engine models, based on past digital forensic investigations, so that a recommendation engine can quickly scan a target dataset to find files of interest and, in some embodiments, rank or classify/categorize the files of interest such that the files most likely to have an impact on the investigation are differentiated.

Different recommendation engine models can be made for different case types, e.g., fraud, drugs, child abuse, etc., or for different desired outcomes, e.g., warrant, broader warrant, conviction, etc. Recommendation engine models can be updated as new information becomes available. The recommendation engine is not designed to perform an exhaustive search but to quickly provide and recommend files of interest that the model predicts will be useful based on what files have been useful in past digital forensic cases. That is, the system can enable the investigator to perform a more thorough search of the target dataset following the initial prediction by the recommendation engine, if desired.

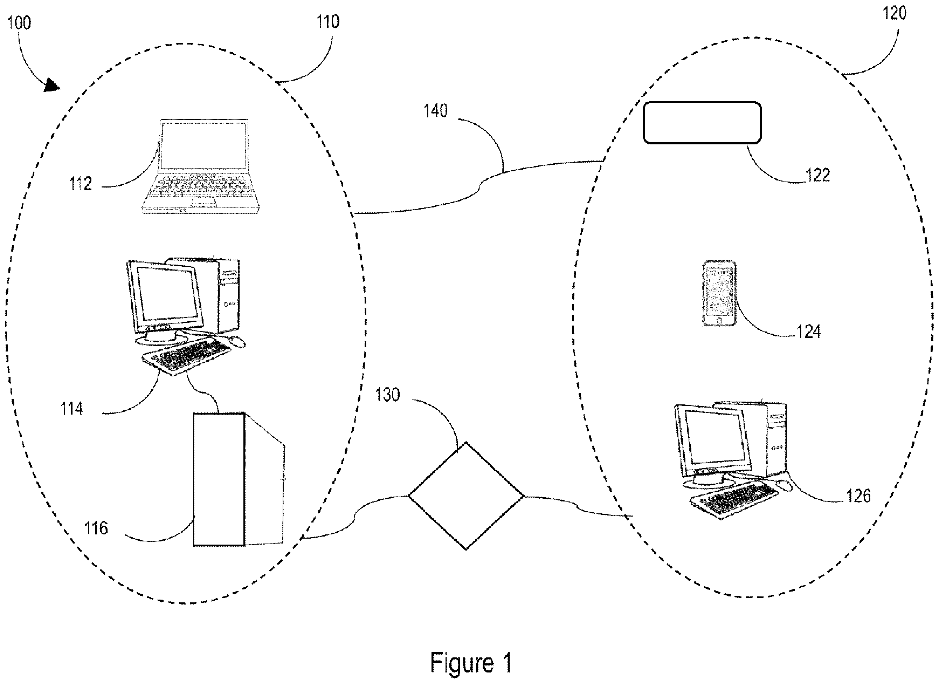

Referring now to Figure 1, illustrated therein is a system 100 for predicting files of interest in a forensic dataset according to an embodiment. The system 100 includes an investigator device 110 and a target device 120.

The investigator device 110 may include at least one computing device having a memory and a processor configured to execute instructions to search and analyze data from the target device 120.

Examples of investigator devices include a laptop computer 112 and a desktop computer 114. The desktop computer 114 may be connected to a server 116. In other embodiments the laptop computer 112 may be connected to a server 116.

In various embodiments, the investigator device 110 may establish a communicative connection 140 to the target device 120 by a wireless connection or wired connection. The wired connection may be a data transfer cable, such as a USB cable or the like.

The investigator device 110 may be powered by an operating system such as Windows 10, Android, iOS, or the like.

The target device 120 may be any device capable of storing data and files. The target device 120 stores a target dataset of forensically relevant data and/or files ("forensic dataset"). The target device 120 may be, for example, a hard drive 122, a mobile device 124, or a desktop computer 126. In various embodiments, the target device 120 may be a seized device (e.g., seized from a suspect) or a corporate device (e.g., a corporate laptop of an employee). The target device 120 may be a cloud computing device, such as a cloud server.

The investigator devices 110 and target devices 120 shown in Figure 1 and discussed herein represent various embodiments of systems and connections for searching for an analyzing data from a target device. That is, a single investigator device 110 or multiple investigator devices 110 may be directly or indirectly connected to target device(s) 120 to scan a target device dataset for files of interest. Herein, investigator devices are discussed which include a recommendation engine which can be trained or configured by an investigator to use a set of criteria identified from past investigations and stored in the investigator device 110 to automatically predict and recommend files and/or data which may be particularly relevant to an investigation type. The files and/or data are flagged by the recommendation engine and displayed to the investigator via a user interface on the investigator device 110. The investigator can then use the results from the recommendation engine to achieve a desired result within an investigation. Alternatively, the investigator can alter the criteria during an investigation, through providing input to a user interface at the investigator device 110, to try and find different files of interest if the output of the recommendation engine was not satisfactory. The investigator can also use the results of a current search to further train the recommendation engine for future cases.

The cloud server 130 may be a single server or multiple servers. The cloud server 130 may be configured to process and store data. The cloud server 130 may further include forensic analysis software for processing and analyzing data transferred to the cloud server 130. The cloud server 130 may be connected to a cloud database for storing forensic data generated by or operated on by the system.

In other embodiments, the investigator device 110 may be communicatively connected to a non-cloud storage device and data may be stored in the non-cloud storage device. That is, in such embodiments the digital forensic investigation may be performed without the use of cloud computing.

While Figure 1 shows an embodiment in which the investigator device 110 connects to the target device 120, other variations are contemplated.

In an embodiment, the target device 120 may include a software tool running on the target device 120 and implementing one or more methods described herein. The investigator may, for example, connect a USB or similar device to the target device 120 and run the tool on the hard drive of the target device 120. In such an embodiment, it can be considered that the target device includes the investigator device 110 or a component thereof as the functionalities of the investigator device 110 may be operating or executing on the target device 120 itself.

In another embodiment, the investigator device 110 may include a cloud computing component which may perform processing including one or more steps of the methods described herein. The investigator device 110 may include a client device running a client software component for communicating with the cloud computing component.

The system 100 may automatically produce a standardized digital report on any digital evidence collected from the target device. The report may have a standardized format. In some cases, the standardized format may be designed to meet certain legal or evidentiary requirements. For example, in order for the evidence collected to be admissible, the evidence may need to meet certain requirements or be collected or presented in a particular way. By generating a report in a standardized format that meets one or more such requirements, the report can be shared with prosecuting attorneys in a format that is most effective or useful.

The investigator device 110 may be a purpose-built machine designed specifically for acquiring, processing, and reporting on digital evidence. The investigator device 110 may store and run a digital investigation application including computer-executable instructions that, when executed by a processor, cause the investigator device to acquire, process, and report on digital evidence.

The investigator device 110 may be controlled and operated by a frontline police officer, investigator, or the like. For example, investigator device 110 may be stored in a police cruiser for use by an officer in the field.

As discussed above, the investigator device 110 may include at least one server computer, desktop computer, notebook computer, tablet, PDA, smartphone, or another computing device.

The investigator device 110 may include one or more of a memory, a secondary storage device, a processor, an input device, a display device, and an output device. Memory may include random access memory (RAM) or similar types of memory. Also, memory may store one or more applications for execution by processor. Applications may correspond with software modules comprising computer executable instructions to perform processing for the functions described below. Secondary storage device may include a hard disk drive, floppy disk drive, CD drive, DVD drive, Blu-ray drive, or other types of non-volatile data storage. Processor may execute applications, computer readable instructions or programs. The applications, computer readable instructions or programs may be stored in memory or in secondary storage or may be received from the Internet or other network 130.

The investigator device 110 may include an input device. The input device may include any device for entering information into investigator device 110. For example, input device may be a keyboard, keypad, cursor-control device, touchscreen, camera, digital pen, stylus, or microphone.

A display device of the investigator device 110 may include any type of device for presenting visual information. For example, display device may be a computer monitor, a flat-screen display, a projector, or a display panel.

An output device of the investigator device 110 may include any type of device for presenting a hard copy of information, such as a printer for example. Output device may also include other types of output devices such as speakers, for example.

In some embodiments, investigator device 110 may include multiple of any one or more of processors, applications, software modules, second storage devices, network connections, input devices, output devices, and display devices.

Although investigator device 110 is described with various components, one skilled in the art will appreciate that the investigator device 110 may in some cases contain fewer, additional, or different components. In addition, although aspects of an implementation of the investigator device 110 may be described as being stored in memory, one skilled in the art will appreciate that these aspects can also be stored on or read from other types of computer program products or computer-readable media, such as secondary storage devices, including hard disks, floppy disks, CDs, or DVDs; a carrier wave from the Internet or other network; or other forms of RAM or ROM. The computer-readable media may include instructions for controlling the investigator device 110 and/or processor to perform a particular method.

Investigator device 110 can be described performing certain acts. It will be appreciated that any one or more of the embodiments of investigator device 110 may perform an act automatically or in response to an interaction by a user of that device. That is, the user of the device may manipulate one or more input devices (e.g., a touchscreen, a mouse, or a button) causing the device to perform the described act. In many cases, this aspect may not be described below, but it will be understood.

The system 100 may enable investigators to collect evidence needed to help to initiate forensic investigations in a timely manner in order to help victims of crimes or to prosecute perpetrators of crimes efficiently and effectively. The system 100 may help secure key evidence such as by quickly capturing and preserving digital evidence. The system 100 allows a user to obtain evidence when it is available to collect information needed to help investigations.

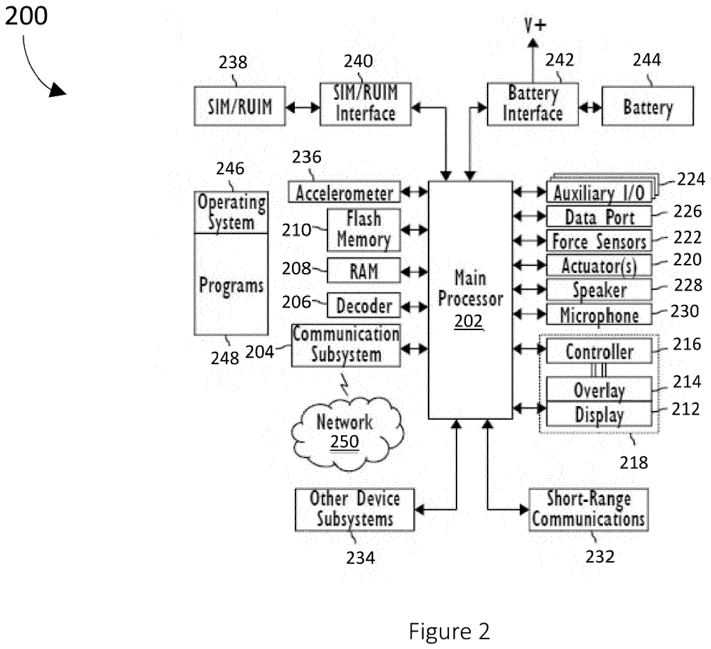

Figure 2 shows a simplified block diagram of components of a device 200, such as a mobile device or portable electronic device. The device 200 may be for example any of the devices shown or discussed in Figure 1. The device 200 includes multiple components such as a processor 202 that controls the operations of the device 200. Communication functions, including data communications, voice communications, or both may be performed through a communication subsystem 204. Data received by the device 200 may be decompressed and decrypted by a decoder 206. The communication subsystem 204 may receive messages from and send messages to a wireless network 250.

The wireless network 250 may be any type of wireless network, including, but not limited to, data-centric wireless networks, voice-centric wireless networks, and dual-mode networks that support both voice and data communications.

The device 200 may be a battery-powered device and as shown includes a battery interface 242 for receiving one or more rechargeable batteries 244.

The processor 202 also interacts with additional subsystems such as a Random Access Memory (RAM) 208, a flash memory 210, a display 212 (e.g. with a touch-sensitive overlay 214 connected to an electronic controller 216 that together comprise a touch-sensitive display 218), an actuator assembly 220, one or more optional force sensors 222, an auxiliary input/output (I/O) subsystem 224, a data port 226, a speaker 228, a microphone 230, short-range communications systems 232 and other device subsystems 234.

In some embodiments, user-interaction with the graphical user interface may be performed through the touch-sensitive overlay 214. The processor 202 may interact with the touch-sensitive overlay 214 via the electronic controller 216. Information, such as text, characters, symbols, images, icons, and other items that may be displayed or rendered on a portable electronic device generated by the processor 202 may be displayed on the touch-sensitive display 218.

The processor 202 may also interact with an accelerometer 236 as shown in Figure 2. The accelerometer 236 may be utilized for detecting direction of gravitational forces or gravity-induced reaction forces.

To identify a subscriber for network access according to the present embodiment, the device 200 may use a Subscriber Identity Module or a Removable User Identity Module (SIM/RUIM) card 238 inserted into a SIM/RUIM interface 240 for communication with a network (such as the wireless network 250). Alternatively, user identification information may be programmed into the flash memory 210 or performed using other techniques.

The device 200 also includes an operating system 246 and software components 248 that are executed by the processor 202 and which may be stored in a persistent data storage device such as the flash memory 210. Additional applications may be loaded onto the device 200 through the wireless network 250, the auxiliary I/O subsystem 224, the data port 226, the short-range communications subsystem 232, or any other suitable device subsystem 234.

For example, in use, a received signal such as a text message, an e-mail message, web page download, or other data may be processed by the communication subsystem 204 and input to the processor 202. The processor 202 then processes the received signal for output to the display 212 or alternatively to the auxiliary I/O subsystem 224. A subscriber may also compose data items, such as e-mail messages, for example, which may be transmitted over the wireless network 250 through the communication subsystem 204.

For voice communications, the overall operation of the portable electronic device 200 may be similar. The speaker 228 may output audible information converted from electrical signals, and the microphone 230 may convert audible information into electrical signals for processing.

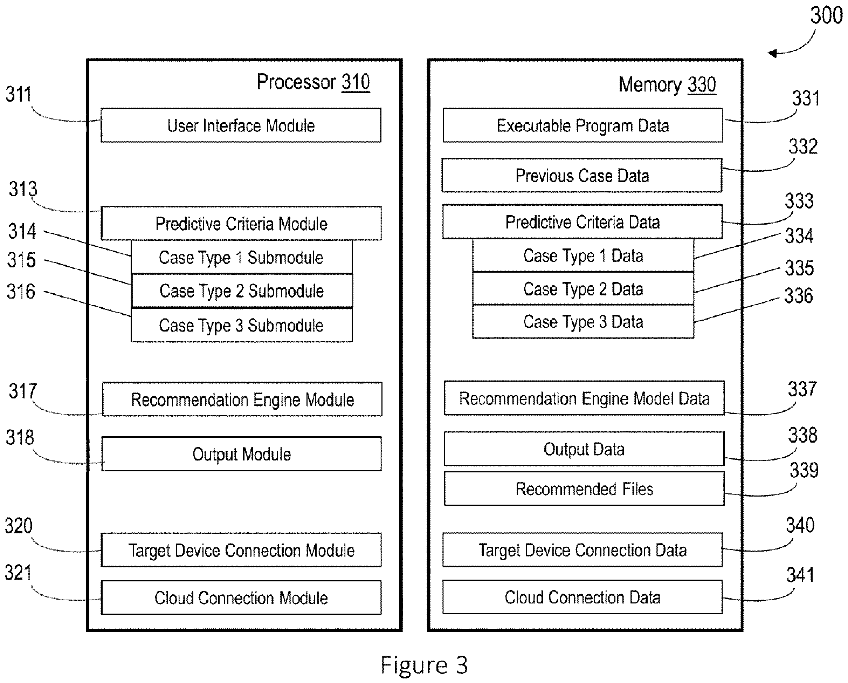

Referring now to Figure 3, therein is illustrated a block diagram of an investigator device 300 for predicting and recommending files of interest for a digital forensic investigation in a target dataset, according to an embodiment.

As discussed above, during some digital forensic investigations it is imperative to acquire digital evidence as quickly as possible, for example, when it is only possible to further the investigation by securing a broader warrant based on the evidence found within a target device. Investigator device 300 is a computing device that can be used in such a digital forensic investigation to promote timely identification of relevant forensic data.

Herein "files of interest", "files of significance", "significant files", or similar are discussed. It is to be understood that "files" may include complete files but also encompasses, data, metadata, partial files, hashes of files, reduced size files, or any other such information that can be scanned within the target dataset and may be useful to a digital forensic investigation.

Herein, "manual" or "manually" performing steps or searches is to be understood to mean that an investigator is using an investigator device to perform steps upon input from the investigator to the investigator device, for example searching a target dataset based on a keyword input by the investigator, in contrast to an "automatic" search which is performed by a recommendation engine.

Investigator device 300 includes a processor 310 and a memory 330. Memory 330 has computer-executable instructions stored thereon which, upon execution by the processor 310, cause investigator device 300 to perform the functions discussed herein. In other embodiments, processor 310 may include more or fewer modules or submodules and memory 330 may comprise more or less data than described in the discussion of Figure 3. It is to be understood that the modules do not necessarily represent distinct physical modules but software or firmware modules which execute various functions on the investigator device, and that the modules and submodules may work separately or together to achieve these functions.

The investigator device 300 includes a user interface module 311. The user interface module 311 is configured to generate a user interface which enables the user (hereafter investigator) of the investigator device 310 to interact with the various modules and software on the investigator device 300 to perform a digital forensic investigation. The user interface module 311 also allows the investigator to interact with the various modules and data on the investigator device 300 when the investigator is not performing a digital forensic investigation, for example, when they are tagging significant files to train a recommendation engine model.

The instructions and data required to run the modules of processor 310 are found in executable program data 331 in memory 330.

The processor 310 includes a predictive criteria module 313. The predictive criteria module 313 is configured to tag files of significance from previous case data 332 stored in memory 330 based on an input from the investigator (received via the user interface module 311).

For example, the investigator may tag various files, using a user interface, that the investigator deems to have been significant for achieving a particular result in past cases (e.g., if a particular file was critical in persuading a judge that a further warrant is required or was critical in securing a conviction).

In Figure 3, the predictive criteria module 313 is shown as including three submodules: case type 1 submodule 314, case type 2 submodule 315, and case type 3 submodule 316. Different case types being investigated may require a different recommendation engine model to predict files of interest and a single investigator device 300 may include several different submodules within the predictive criteria module 313 which an investigator can create or has created for generating a model for the recommendation engine. For example, case type 1 may be fraud cases, case type 2 may be child sexual abuse cases, and case type 3 may be drug cases.

The associated predictive criteria data 333 as well as case type 1 data 334, case type 2 data 335, and case type 3 data 336 are stored in memory 330. The data 333 does not only include the tagged files but may also include any or all metadata associated with those files, for example, when were the files accessed, where were the files stored, what other files were accessed around the same time as the file, etc.

The predictive criteria data 333 (including 334, 335, and 336) is used to generate recommendation engine model data 337. The recommendation engine model data 337 may include data for a plurality of different models that can be used by the recommendation engine. For example, each of the predictive criteria data 334, 335, and 336, for different case types as discussed above, may be used to generate a recommendation engine model which is stored within recommendation engine model data 337 .

The recommendation engine module 317 uses the recommendation engine model data 337 to automatically scan a target dataset.

That is, when an investigator uses the recommendation engine module 317 to scan a target dataset the investigator is not manually searching through the target dataset. Instead, the investigator device 300 is performing a scan of the target dataset using the recommendation engine model data 337 to find only those files which are predicted to be the most important to the investigation at the current stage of the investigation.

Each individual recommendation engine model may use a single set of predictive criteria data to scan a target dataset and predict or identify files in the target data that may be of importance or particular relevance to a forensic investigation. The module 317 may then recommend the identified files in an output, which may be provided to the investigator on the user interface 311 of the investigator device 300. The output may be provided in an output module 318. The output may be a list of files or a report. Each file in the output may include a file identifier identifying the file and metadata of the file, which may include one or more attributes of the file. The output may be sent to another device. The output of the recommendation engine module 317 is stored as output data 338 in memory 330.

Each recommended file in the output may be acquired and stored in memory 330 as recommended files 339. The investigator may be prompted to decide whether any of the recommended files in the output should be acquired and stored as recommended files 339 or the recommended files may be automatically stored as recommended files 339.

Because the recommendation engine is automatically scanning the target dataset, it may occur that the model finds files or searches in places which are beyond the scope of a warrant. Therefore, the predictive criteria module 313 or the recommendation engine module 317 may be further configured to add filters to the recommendation engine model which prevent the model from outputting, or even finding, unwanted files. For example, these unwanted files may include files that were created or accessed on days or at times outside of times known to be pertinent to the investigation. Within the recommendation engine module, the investigator may be able to turn off or on various filters. For example, the model may be configured to disregard files that fall within a specified date or time range. As such, the model may be configured, during operation, to scan metadata of the respective file and compare the metadata to search criteria to determine whether such file should be disregarded.

The predictive criteria module 313 may include the ability for the investigator to rank the significant files or to otherwise provide data which allows for the recommendation engine model to include a hierarchy within which any files of interest can be ranked. For example, the predictive criteria module 313 may be configured to receive from the investigator at least one indicator of a preference for one type of file over another and to include that in the recommendation engine model data 337 created from the predictive criteria data 333.

The predictive criteria data 333 may include a hierarchy in which the significant files of previous cases are ranked relative to files within each case or relative to the role each file played in achieving a desired result within the case. As examples, a video file may be ranked higher than a text file, files actioned (e.g. created, saved, modified, accessed, etc.) on or after a specific date may be ranked higher than files from before that specific date, or files actioned within a specific date or time range may be ranked higher than files actioned outside the specific date or time range.

Using this hierarchy, the output from the recommendation engine may include a determined ranking of each file of interest relative to each other file of interest. For example, the files of interest may be provided as a list wherein the first file in the list is predicted to be the most relevant file, and the second file less relevant than the first but more relevant than the third, etc. In other cases, the output data 338 from the recommendation engine may include a score for each file of interest which predicts the likelihood that the file is relevant to the case. For example, the model 337 may assign each file of interest a percentage or a score out of ten, wherein a higher percentage or higher score out of ten means the file is more likely to be relevant to the particular forensic investigation.

Each recommendation engine model may be configurable via user input from the investigator. That is, the recommendation engine module 337 may be configured to allow the investigator to make temporary adjustments to the model during an investigation if the output is not what the investigator wants or expects. The recommendation engine module 337, may also be configured to allow the investigator to permanently adjust the model for use outside of the current investigation. As new data and datapoints are collected from target datasets and investigations the recommendation engine models can be further trained to increase the accuracy of the predictions made by the models. In some embodiments, the predictive criteria module may be configured to allow for further training of a recommendation engine model.

The recommendation engine module may be configured to allow the investigator to tag recommended files of the output as false positives to further train the model.

In some embodiments, data of interest may be collected during a digital forensic investigation and may be automatically added to a set of predictive criteria 333 and/or a recommendation model 337. This data may include keywords searched, file types, file locations, etc. The investigator may choose which set of predictive criteria 333 or which recommendation engine model 337 to train such that the data is sent and integrated automatically into the criteria 333 or model 337 during or after the forensic investigation.

In some embodiments, previous case data 332 may be automatically added to the predictive criteria data 333 for a specific recommendation engine model. That is, an investigator may be able to assign each case to a case type which marks any data from the case to be added to a specific set of predictive criteria data 333. In this way a specific recommendation engine model in recommendation engine model data 337 may be trained continually as new data is added to the predictive criteria data 333.

The processor 310 of the investigator device 300 further includes a target device connection module 320 and a cloud connection module 321 which, in various embodiments or circumstances, can be used to access the target dataset on a target device.

In some embodiments or circumstances, the target device connection module 320 establishes a connection between the investigator device 300 and the target device (e.g., device including data storage media storing the target dataset, such as a mobile phone, a laptop, desktop, external data storage device, etc.). The investigator device 300 may receive certain target device information, for example via the user interface module 311, which enables the investigator device 300 to access the target device. The information used to establish a connection with the target device is stored in memory 330 as target device connection data 340.

In some embodiments or circumstances, the cloud connection module 321 establishes a connection between the investigator device 300 and a cloud server (target device) which is storing a target dataset. The investigator device 300 may receive cloud server information at the investigator device 300 which enables the investigator device 300 to communicatively connect with and access the cloud server. The information associated with connecting with the cloud server is stored in memory 330 as cloud connection data 341. In some embodiments, the investigator device 300 may connect through a cloud server to a target dataset on a separate target device.

In other embodiments, the recommendation engine model may be created using publicly available opensource frameworks such as Tensorflow.

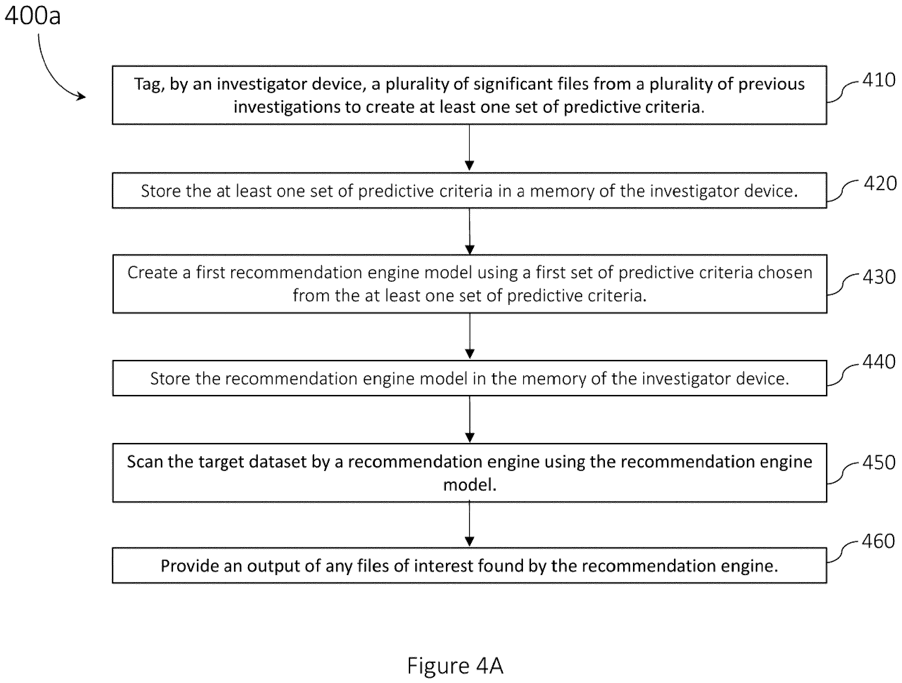

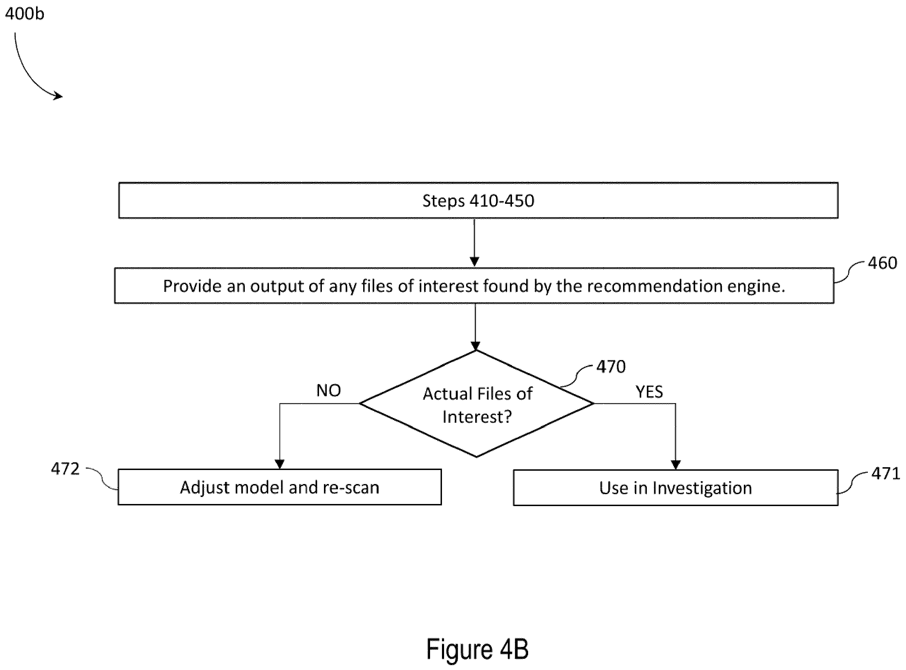

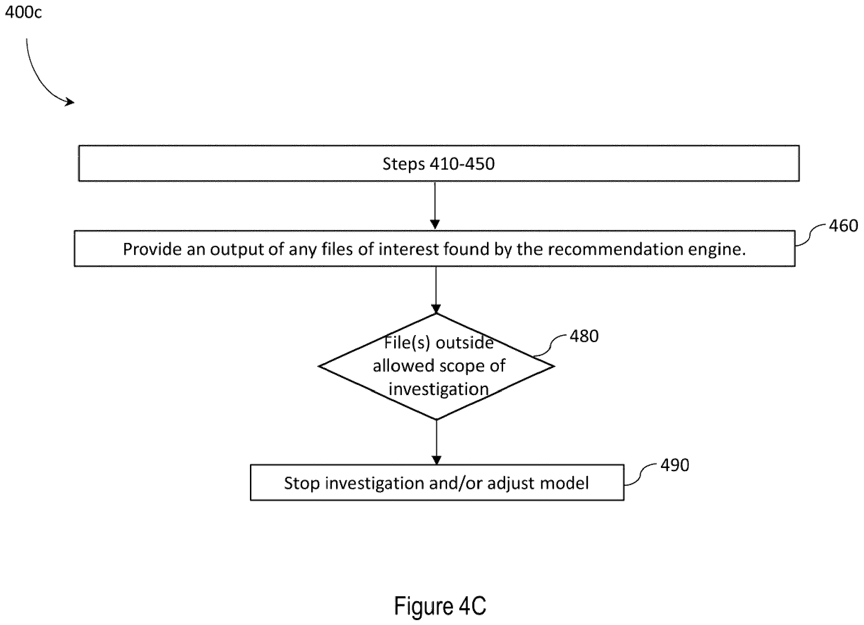

Figure 4 is a flow diagram of a general method 400a of predicting files of interest in a target dataset in a digital forensic investigation, according to an embodiment. The method may be executed by an investigator device similar to investigator device 300 of Figure 3.

While method 400a refers to a single investigator device, it is to be understood that the investigator device may include multiple computing devices and various steps may occur on one or more of the computing devices of the investigator device.

At 410, on an investigator device, a plurality of significant files from a plurality of previous investigations are tagged to create at least one set of predictive criteria. The tagged files may include files that an investigator knows were particularly useful in getting a desired result during a previous investigation.

At 420, the at least one set of predictive criteria is stored in a memory of the investigator device.

At 430, a first recommendation engine model is created using a first set of predictive criteria from the at least one set of predictive criteria. The creation of a recommendation engine model may be automatic upon generation of each set of predictive criteria, or an investigator may be required to initiate the creation of a recommendation engine model separate from generating each set of predictive criteria through providing input to a user interface (e.g., user interface module 311 of Figure 3).

Each recommendation engine model may require data from several if not tens of previous cases before the recommendation engine is able to predict files of interest within a target dataset to an acceptable or desired accuracy. However, the data required for an accurate recommendation engine model should be less in size and complexity than data that would be required for machine learning, for example, for training a neural network. For example, the parameters used to define the recommendation engine model may include file types (e.g., file extensions for photos including .jpeg, tiff, .png, etc.), metadata matches (e.g., photos taken on a specific type of camera, documents written by the same author), etc., which do not require an artificial intelligence, such as machine learning, to create a classification model. As more digital forensic investigations are completed, the significant data from each case may be added to the set of predictive criteria to further train the appropriate recommendation engine model. The data may be added to a set of predictive criteria manually by an investigator by tagging files of interest from an investigation.

The data may also be added automatically to a set of predictive criteria. That is, an investigator may choose to add all data from any individual digital forensic investigation to an appropriate set of predictive criteria and therefore an appropriate recommendation engine model. This may be based on the type of investigation. For example, the investigator may classify an investigation as a fraud case, such as through providing a user input to a user interface. In response, the system may add all data from the case to the set of predictive criteria that is associated with fraud cases. Automatic addition of data to a set of predictive criteria may be better suited for data acquired by the recommendation engine wherein the investigator has vetted the output of the recommendation engine and found the output satisfactory.

At 440, the first recommendation engine model is stored in the memory of the investigator device.

At 450, a target dataset is automatically scanned by a recommendation engine (for example, recommendation engine module 317 of Fig. 3) using the first recommendation engine model. That is, an investigator does not have to manually search through the target dataset which is a time-consuming endeavor and instead the recommendation engine scans the target dataset to identify files of interest in the target dataset. The identified files of interest represent files in the target dataset which are predicted by the recommendation engine model to be useful or important to the current digital forensic investigation based on the predictive criteria used to create the recommendation engine model.

At 460, the recommendation engine model provides an output of any files of interest which have been identified. The output may be viewable on a user interface of the investigator device. The output may be sent to another computing device. The output may be a list of files of interest or a report.

In some embodiments, the output may include a hierarchical ranking of the files of interest if the recommendation engine model was created using data which has been ranked or otherwise includes an indication of which types of files of interest have been most important in past cases. The hierarchy may be represented in any conceivable way, including listing the files of interest predicted to be most important at the top of the output, or the output may include a relevance score for each file of interest which indicates a predicted level of importance of the file. The recommendation engine (for example recommendation engine module 317 of Figure 3) may be configured to output or display only those files of interest having a relevance score higher than a threshold value. The threshold relevance score value is stored in memory and referenced by the recommendation engine in determining whether the file of interest meets the threshold. The threshold value may be predetermined. The threshold value may be set by the investigator. The threshold value may be set according to an investigator input provided via the user interface.

Referring now to Figure 4B, shown therein is a method 400b of predicting files of interest in a target dataset in a digital forensic investigation, according to an embodiment. Method 400b is an extension of method 400a including additional steps.

Steps 410-460 are the same as method 400a. At 460, the recommendation engine model provides an output of any files of interest which have been identified. The output may be viewable on a user interface of the investigator device. The output may be sent to another computing device. The output may be a list of files of interest or a report.

At 470, the investigator reviews the output from 460 and decides if the output included files of interest that the investigator thinks would actually be helpful for the case.

At 470, if there are files of interest present in the output and upon review the investigator decides that the files are actual files of interest to the current purpose of the investigation then the investigator would, at 471, proceed to use the output within the investigation. For example, they may show the output to the appropriate legal authority to be used to secure a warrant or to make an arrest. In other circumstances, the investigator may use the output as a starting point for a deeper investigation, i.e., the investigator could take a deeper look into the specificfiles of interest to see what was occurring around those files. The investigator could also choose a new recommendation model to run a new scan of the target dataset based on the output of the first scan. For example, if a picture of a gun is identified as a file of interest in the target dataset by the recommendation engine model used in a first scan of the target dataset, the investigator may choose to perform a manual search for files related to guns or could choose to run a recommendation engine model for a case type more appropriate for gun crimes.

If, at 472, there are no actual files of interest within the output from the recommendation engine, the recommendation engine module is configured so that parameters of recommendation engine model are adjustable by the investigator and the recommendation engine can re-scan the target dataset using the adjusted recommendation engine model.

Referring now to Figure 4C, shown therein is a method 400c of predicting files of interest in a target dataset in a digital forensic investigation, according to an embodiment. Method 400c is an extension of method 400a including additional steps. During a digital forensic investigation, files may be found that are both beyond the scope of the digital forensic investigation and potentially harmful to the legality of the forensic investigation at large. For example, a file may be found that is beyond the scope of a warrant for the digital forensic investigation. When tagging significant files for the creation of a recommendation engine model, the investigator will try to be as specific and careful as possible to ensure that the recommendation engine model only finds appropriate files, but because the recommendation engine model is a type of artificial intelligence that functions automatically there may be no guarantee that inappropriate files are not found.

Steps 410-460 are the same as method 400a. At 460, the recommendation engine model provides an output of any files of interest which have been identified.

At 480, it is determined (likely by an investigator) that the recommendation engine identifies an "out of scope" file (or data). In this circumstance, the investigation, at 490, is halted and either stopped completely or the recommendation engine model can be adjusted to prevent unwanted files from being found again. That is, the recommendation engine system is configured so that the investigator can adjust the recommendation engine model from the recommendation engine module of the investigator device and then re-scan the target dataset.

To that end, the recommendation engine model may include at least one filter to ensure that unwanted files of interest are not found, or specific "areas" of the target device are not searched. This can be useful in some investigations where there is a warrant to only search for specific information within a target device and searching beyond that warrant can have detrimental consequences to an investigation. The filter may be included in the recommendation engine model upon generation of the model or may be added to the model as needed, for example as part of the recommendation engine module 317, for each individual digital forensic investigation.

In some embodiments, at any point during an investigation using a recommendation engine the investigator may adjust the parameters of the recommendation engine model such that the model will find different files of interest. The investigator may also abandon the recommendation engine and perform a "manual" search.

In the embodiments discussed above a single model has been used but in other embodiments multiple models may be run simultaneously or in sequence. Each model may be specific to a case type, e.g., a drug trafficking model, a fraud model, a financial crime model and the investigator may run the models to find evidence to be used in a case or separate cases for each of those types. Each model may be for different types of evidence, either within a case type or not, wherein there is a model for photos, a model for text documents, a model for messaging, etc. As different investigators may approach an investigation differently, a model made for the same investigation by one investigator may not return the same results as a model made by a second investigator. Therefore, an investigator may choose to run multiples models made by different investigators for the same investigation.

Where multiple models are used a recommendation engine module may be further configured to compare the results between each model to find files of interest that were found by multiple models. The recommendation engine module may also be configured to turn off a model if it is not returning relevant results either on its own or when compared to the other models.

In some embodiments, the recommendation engine model may be configurable to exclude files from the search based on jurisdiction or warrant authorizations.

While the above description provides examples of one or more apparatus, methods, or systems, it will be appreciated that other apparatus, methods, or systems may be within the scope of the claims as interpreted by one of skill in the art.

## Claims

1. A method of predicting files of interest during a digital forensic investigation of a target dataset stored on a target device, the method comprising:
tagging a plurality of significant files from a plurality of previous investigations to create at least one set of predictive criteria (410);
storing the at least one set of predictive criteria in a memory of the investigator device (420);
using a first set of predictive criteria to generate a first executable recommendation engine model (450);
storing the first recommendation engine model in the memory of an investigator device (440);
automatically scanning the target dataset by a recommendation engine using the first recommendation engine model (450); and
providing an output of any files of interest (460).

2. The method of claim 1 wherein automatically scanning the target dataset further includes choosing the first recommendation engine model based on a case type of the investigation.

3. The method of any one of claims 1 and 2 wherein the first recommendation engine model includes a hierarchy of file types of interest and the files of interest are ranked according to the hierarchy.

4. The method of any one of claims 1 to 3 wherein tagging the plurality of significant files includes manually tagging the plurality of significant files by a user of the investigator device.

5. The method of any one of claims 1 to 4 further comprising adjusting the first set of predictive criteria to an adjusted set of predictive criteria to alter the first recommendation engine model during the digital forensic investigation.

6. The method of any one of claims 1 to 5 further comprising adjusting the first set of predictive criteria to alter the first recommendation engine model based on the output of the digital forensic investigation for use in future digital forensic investigations.

7. The method of any one of claims 1 to 6 wherein the recommendation engine model further includes at least one filter and wherein providing an output of any files of interest includes applying the at least one filter to the files of interest.

8. The method of any one of claims 1 to 7 further comprising:
using a first set of predictive criteria to generate at least a second executable recommendation engine model;
storing the at least a second recommendation engine model in the memory of the investigator device; and
automatically scanning the target dataset by the recommendation engine using the second recommendation model.

9. A system (100) for predicting files of interest from a target dataset of a target device, the system comprising:
a target device (120) including a first memory storing a target dataset;
an investigator device (110) including a processor communicatively coupled to a second memory, the investigator device configured to:
generate at least one set of predictive criteria from tagged significant files of previous investigations;
store the at least one set of predictive criteria in the second memory;
create a first recommendation engine model from a first set of predictive criteria of the at least one set of predictive criteria;
store the first recommendation engine model in the second memory;
scan the target dataset by a recommendation engine using the first recommendation engine model; and
provide an output of any files of interest.

10. The system of claim 9, wherein the investigator device (110) is further configured to generate a plurality of sets of predictive criteria for a respective plurality of case types and to create a plurality of recommendation engine models for each of the plurality of sets of predictive criteria respectively.

11. The system of any one of claims 9 and 10, wherein the output is a list of files of interest or a report.

12. The system of any one of claims 9 to 11, wherein the at least one set of predictive criteria includes a hierarchy of file types of interest and the output of files of interest is ranked according to the hierarchy.

13. The system of any one of claims 9 to 12, wherein the processor is further configured to adjust the first set of predictive criteria as new data is collected from target datasets.

14. The system of any one of claims 9 to 13, wherein the first recommendation engine model further includes at least one filter.

15. The system of any one of claims 9 to 14, wherein the processor is further configured to:
create at least a second recommendation engine model from a second set of predictive criteria of the at least one set of predictive criteria;
store the at least a second recommendation engine model in the second memory; and
scan the target dataset by the recommendation engine using the second recommendation engine model.
